# EUROPEAN PATENT APPLICATION

(11) **EP 1 674 748 A1**
(43) Date of publication of application: **28.06.2006**
(21) Application number: 04030445.3
(22) Date of filing: 22.12.2004
(51) Int. Cl.: F16C 35/067, B60B 27/00

(54) **A method of mounting a wheel hub bearing assembly to a knuckle of a vehicle suspension and a vehicle suspension knuckle suitable for such mounting**

(71) Applicant: Ford Global Technologies, LLC., Dearborn MI 48126 (US)
(72) Inventor: Brokholc, Michal, 436 45 Askim (SE)
(74) Representative: Hammond, Andrew David

(57) **Abstract**

The present patent application relates to a method of mounting a wheel hub bearing assembly (1) to a knuckle (4) of a vehicle suspension by forcefully inserting a wheel bearing (2) of the wheel hub bearing assembly (1) in a bore (5) formed in said knuckle (4). The hub unit (1) is brought into axial alignment with the knuckle bore (5), hereafter the whole hub unit (1) is translated in the axially inner direction (A) such that the wheel bearing (2) is fully received in the knuckle bore (5). Finally, the hub unit (1) is secured to the knuckle (4) by forming a rivet by means of clamping an outer ring of the wheel bearing (2) by plastic deformation of an axially outer end flange (7) of the knuckle (4), which end flange (7) encircles the knuckle bore opening (8).

## Description

### Technical field

The present invention falls within the field of mounting a wheel hub bearing assembly to a suspension knuckle of a vehicle. More particularly, the invention relates to a method of mounting a wheel hub bearing assembly to a knuckle of a vehicle suspension by forcefully inserting a wheel bearing of the wheel hub bearing assembly in a bore formed in the knuckle in accordance with the preamble of claim 1. The invention also relates to a vehicle suspension knuckle for receiving a vehicle wheel hub bearing assembly according to the preamble of claim 6.

### Background of the invention

Presently there is a trend in the automotive industry to mount firstly a wheel bearing assembly to a hub, and then fit the hub bearing assembly to a knuckle as one unit.

EP 0 879 972 (corresponding to US 6,112,411) discloses a method of mounting a wheel hub bearing assembly to the knuckle of a vehicle suspension standard by forcefully inserting the outer race of the bearing in a bore in the knuckle. The bore has a groove near its axially outer side to accommodate a snap ring for axially securing the bearing's outer race within the bore. Angularly spaced radial slots are provided in the axially outer rim of the knuckle; a hub bearing unit is assembled separately. The snap ring is fitted over the hub at an axial location between the axially outer end portion of the bearing outer race and a portion of the hub facing said end portion; at least one axially tapered sliding surface is provided between said facing portions. The snap ring is radially compressed on the tapered sliding surface to the radial dimension of the knuckle bore, whereby the tapered sliding surface cooperates such that the radial compression of the snap ring sets an axial preloading to the axially inner set of rolling elements. Finally, the hub is pressed to fit the bearing in the knuckle bore and the snap ring into the knuckle groove.

A problem with the prior art method of mounting a wheel hub bearing assembly to the knuckle of a vehicle suspension is that, although the automotive industry is trying to fix wheel bearings and wheel hub bearings by press fit, snap rings, circlips, gluing etc., the wheel hub bearing assemblies mounted to the knuckle of a vehicle suspension in accordance with these known methods tend not to work fully satisfactorily. This because an outer sealing ring of packings arranged between an outer and an inner ring of the wheel bearing of modern hub units usually contain an encoder for an Anti-lock Brake System (ABS system) of the vehicle. This encoder is usually in the shape of a magnetic ring integrated in the outer sealing ring. A problem with wheel hub bearing assemblies mounted to the knuckle of a vehicle suspension in accordance with these known methods is that the bearing may move when loads from the wheels exceed a certain level. This movement can cause noise disturbances and ultimately shut down of the ABS system if an ABS-sensor arranged at the knuckle is reading its signal from such an encoder in the bearing. The tolerances for such movement without shut down is usually less than 0.3 millimeters.

Furthermore, fixation using separate affixing elements, such as e.g. snap rings, circlips etc. adds to the overall cost, and fixation with glue, such as e.g. LOCTITE® requires cleaning of the components, which is expensive and is commonly not approved by many factories due to the negative effects the solvents or cleaning agents may have on people's health.

### Summary of the invention

One object of the invention is to provide an improved method of mounting a wheel hub bearing assembly to a knuckle of a vehicle suspension capable of overcoming the above discussed prior art drawbacks.

In accordance with one aspect of the invention as claimed, this object is accomplished by a method as claimed in claim 1.

Thanks to the provision of the steps of: bringing the hub unit into axial alignment with the knuckle bore; translating the whole hub unit in the axially inner direction such that the wheel bearing is fully received in the knuckle bore; and, securing the hub unit to the knuckle by forming a rivet by means of clamping an outer ring of the wheel bearing by plastic deformation of an axially outer end flange of the knuckle, which end flange encircles the knuckle bore opening, the wheel hub bearing assembly is fixed to the knuckle such that the above discussed prior art drawbacks are eliminated, e.g. correct operation of an ABS system of a vehicle is ensured at low cost and environmentally and health friendly mounting of the components enabled.

According to another aspect of the present invention, there is provided a vehicle suspension knuckle for receiving a vehicle wheel hub bearing assembly as claimed in claim 6.

Thanks to the provision of the vehicle suspension knuckle comprising: a bore formed in the knuckle, which bore is adapted to receive a wheel bearing of the wheel hub bearing assembly; and, an axially outer end flange encircling the knuckle bore opening, which outer end flange is suitable for forming a rivet to thereby clamp an outer ring of the wheel bearing, by plastic deformation, the wheel hub bearing assembly may fixed to the knuckle such that the above discussed prior art drawbacks are eliminated, e.g. correct operation of an ABS system of a vehicle is ensured at low cost and through environmentally and health friendly mounting of the components.

Preferred embodiments are listed in the dependent claims.

### Description of drawings

In the following, the invention will be described in greater detail with reference to attached drawings, in which

Fig. 1 is a schematic illustration, partially in cross section, of a wheel hub bearing assembly and a knuckle adapted to receive the wheel hub bearing assembly,

Fig. 2 is a schematic illustration, partially in cross section, of the wheel hub bearing assembly of figure 1 received in and affixed to the knuckle of figure 1.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

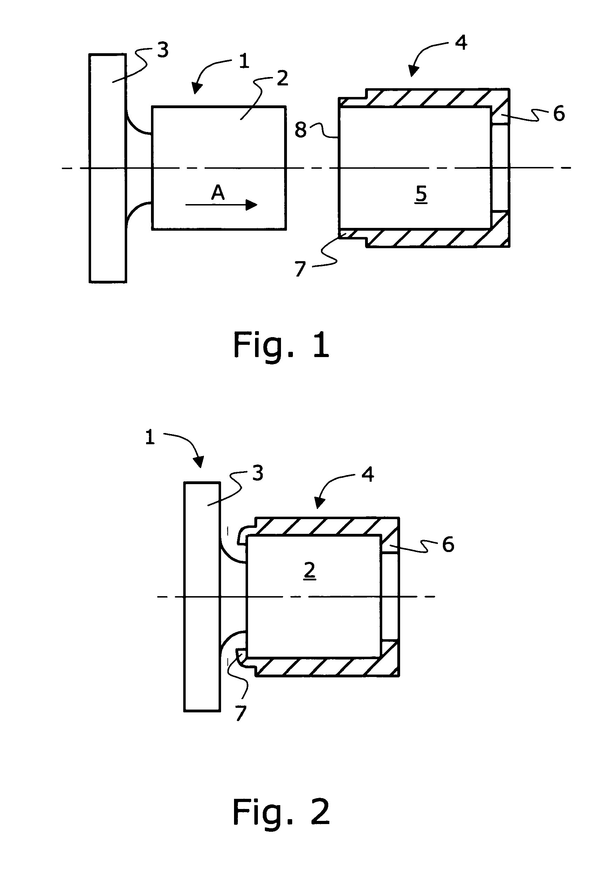

In FIGS. 1 and 2, a hub unit, i.e. a wheel hub bearing assembly, is generally designated 1. A wheel bearing 2 is arranged on the hub 3 of the hub unit 1. The wheel bearing 2 may be formed by an outer ring and an inner ring (not shown) and intermediate rows of rolling bodies (not shown) arranged to run in raceways (not shown). Furthermore, the wheel bearing 2 is also protected from entrance of dirt by packings (not shown). An outer sealing ring of the packings between the outer and inner ring of the wheel bearing 2 may contain an encoder for an Anti-lock Brake System (ABS system) of the vehicle, usually in the shape of a magnetic ring integrated in the outer sealing ring.

The hub unit 1 is adapted for assembly to the knuckle 4 of a vehicle suspension, which knuckle 4 is provided with a bore 5 for receiving the outer ring of the wheel bearing 2. To mount the hub unit 1 in the knuckle 4 it is initially brought into axial alignment with the knuckle bore 5. Thereafter, the whole hub unit 1 is translated in the axially inner direction (to the right as indicated by arrow A in FIG. 1) by pressing on the outer ring of the wheel bearing 2 in the axially inner direction to fit the wheel bearing 2 into the knuckle bore 5. In sliding the hub unit 1 further, the wheel bearing 2 is pushed along the cylindrical portion of the knuckle bore 5 in the axial direction until the wheel bearing 2 is fully received within the knuckle bore 5. This takes place at a certain point, when the wheel bearing 2 abuts the radially inwards protruding end portion 6 terminating the knuckle bore 5 inwardly. Through forcefully inserting the wheel bearing 2 in the bore 5 a press fit engagement is achieved.

Thereafter, the hub unit 1 is secured to the knuckle 4, e.g. by cold forming the axially outer end flange 7 encircling the knuckle bore opening 8. A clamping rivet is formed on the axially outer end flange 7 encircling the knuckle bore opening 8 by plastic deformation of that end flange 7 after the hub unit 1 to be clamped has been press fitted into the knuckle bore 5. The clamping rivet may be formed by a cold forming process or by a rivet forming process, such as a roll riveting process. The aforementioned processes are per se known processes. The connection between the outer ring of the wheel bearing 2 and the knuckle 4 has to be very strong, such that the hub unit 1 can withstand high axial stresses in operation without coming off the knuckle 4 or moving with respect thereto. Hereby is ensured correct operation of the ABS system of the vehicle as well as a low cost and environmentally and health friendly mounting of the components. The method in accordance with the present invention can be used to fix hub unit wheel bearings 2 to steel as well as aluminum knuckles.

In accordance with the foregoing mounting method no forces are applied through the sets of rolling bodies, whereby the risk of deforming and damaging the raceways of the wheel bearing 2 is eliminated. Generally, in fitting the hub unit 1 in the knuckle 4, high axial forces should not be applied to the inner ring of the wheel bearing 2, as this would create a stress path going from the inner ring through the rolling bodies and the outer ring, whereby the raceways of the wheel bearing 2 could easily suffer some amount of permanent deformation. Therefore, mounting axial forces are always applied to the outer ring directly.

In accordance with the present invention, a vehicle suspension knuckle 4 for receiving a vehicle wheel hub bearing assembly 1 according to the above method is also envisaged. The vehicle suspension knuckle 4 comprises a bore 5 formed in the knuckle 4. The bore 5 is adapted to receive a wheel bearing 2 of the wheel hub bearing assembly 1. An axially outer end flange 7 encircles the knuckle bore opening 8. The outer end flange 7 is suitable for forming a rivet, thereby clamping an outer ring of the wheel bearing 2. The rivet may be formed by plastic deformation, e.g. by a cold forming process or by a rivet forming process, such as a roll riveting process.

In accordance with the present invention an automotive vehicle is also envisaged, which comprises a vehicle suspension knuckle 4 as described above or a vehicle suspension knuckle 4 and a vehicle wheel hub bearing assembly 1 mounted according to the above method. Hereby correct operation of the ABS system of the vehicle is ensured at low cost and through environmentally and health friendly mounting.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method of mounting a wheel hub bearing assembly (1) to a knuckle (4) of a vehicle suspension by forcefully inserting a wheel bearing (2) of the wheel hub bearing assembly (1) in a bore (5) formed in the knuckle (4),
**characterized in** comprising the steps of:
bringing the hub unit (1) into axial alignment with the knuckle bore (5);
translating the whole hub unit (1) in the axially inner direction (A) such that the wheel bearing (2) is fully received in the knuckle bore (5);
securing the hub unit (1) to the knuckle (4) by forming a rivet by means of clamping an outer ring of the wheel bearing (2) by plastic deformation of an axially outer end flange (7) of the knuckle (4), which end flange (7) encircles the knuckle bore opening (8).

2. A mounting method as claimed in claim 1, **characterized in that** the rivet is formed such that it clamps the hub unit (1) around the edge of the outer ring of the wheel bearing (2) by cold forming.

3. A mounting method as claimed in claim 1, **characterized in that** the rivet is formed such that it clamps the hub unit (1) around the edge of the outer ring of the wheel bearing (2) by a roll riveting process.

4. A mounting method as claimed in claim 1, **characterized in that** the whole hub unit (1) is translated in the axially inner direction (A) by pressing on the outer ring of the wheel bearing (2).

5. A mounting method as claimed in claim 4, **characterized in that** the wheel bearing (2) is translated in the axially inner direction (A) until the wheel bearing (2) abuts a radially inwards protruding end portion (6) terminating the knuckle bore (5) inwardly.

6. A vehicle suspension knuckle (4) for receiving a vehicle wheel hub bearing assembly (1) by means of the method of any one of the preceding claims, **characterized by** the vehicle suspension knuckle (4) comprising:
a bore (5) formed in the knuckle (4), which bore (5) is adapted to receive a wheel bearing (2) of the wheel hub bearing assembly (1); and,
an axially outer end flange (7) encircling the knuckle bore opening (8), which outer end flange (7) is suitable for forming a rivet to thereby clamp an outer ring of the wheel bearing (2), by plastic deformation.

7. An automotive vehicle, **characterized in that** it comprises a vehicle suspension knuckle (4) according to claim 6.

8. An automotive vehicle, **characterized in that** it comprises a vehicle suspension knuckle (4) and a vehicle wheel hub bearing assembly (1) mounted according to the method of any one of the claims 1 to 5.
